# FASCICULE DE BREVET EUROPEEN

(11) **EP 3 110 028 B1**
(45) Date de publication et mention de la délivrance du brevet: **01.08.2018**
(21) Numéro de dépôt: 16175848.7
(22) Date de dépôt: 23.06.2016
(51) Int. Cl.: H04B 3/54, H04L 1/00

(54) **PROCÉDÉ DE TRANSMISSION DE TRAMES**
VERFAHREN ZUM ÜBERTRAGEN VON DATENRAHMEN
FRAME TRANSMISSION METHOD

(30) Priorité: 26.06.2015 FR 1555922
(43) Date de publication de la demande: 28.12.2016
(73) Titulaire: SAGEMCOM ENERGY & TELECOM SAS, 92500 Rueil-Malmaison (FR)
(72) Inventeur: TEBOULLE, Henri, 92500 Rueil-Malmaison (FR); RAZAZIAN, Kaveh, 92500 Rueil-Malmaison (FR)
(74) Mandataire: Cabinet Le Guen Maillet

(56) Documents cités:
- FR-A1- 2 991 531
- US-A1- 2007 274 260
- US-A1- 2014 105 313

## Description

La présente invention concerne une transmission de trames sous forme de symboles modulés représentatifs d'un entête de couche physique et d'un ensemble de données issues de couches supérieures à la couche physique. La présente invention concerne plus particulièrement un choix de mode d'encodage parmi un mode cohérent et un mode différentiel pour transmettre l'entête de couche physique.

Chaque transmission de trames depuis un dispositif transmetteur vers un dispositif récepteur repose, au niveau de la couche physique (niveau « 1 » du modèle OSI (« *Open Systems Interconnection* » en anglais)), sur des techniques de modulation de signal.

C'est le cas par exemple dans des réseaux de communication à courants porteurs en ligne (« powerline communications network » en anglais) selon le standard de communication G3-PLC ou selon les spécifications PRIME (« *PoweRline Intelligent Metering Evolution* » en anglais), où des schémas de modulation de type OFDM (*« Orthogonal Frequency Division Multiplexing »* en anglais) sont utilisés dans le cadre de réseaux d'alimentation électrique de type AMM *(« Automated Meter Management »* en anglais). Chaque schéma de modulation utilisable dans un tel réseau de communication à courants porteurs en ligne est associé à une bande fréquentielle dans laquelle se retrouvent les signaux utiles aux opérations de démodulation effectuées par le dispositif récepteur suite à une transmission par le dispositif transmetteur selon ledit schéma de modulation.

On retrouve aussi ce type de transmission de trames dans des technologies de communication radio fréquence.

La technologie OFDM permet de travailler à des débits de transmission élevés en accroissant l'efficacité spectrale. Dans le cas d'une allocation flexible du spectre utilisé, la technologie OFDM permet de gérer les débits de transmission, afin de lutter contre les perturbations dues aux bruits. Notamment, les technologies G3-PLC et PRIME utilisent la technologie OFDM et ont défini plusieurs bandes de fréquences entre 10 kHz et 500 kHz, afin d'optimiser les débits de transmission et lutter contre les bruits dans les transmissions. De manière conventionnelle, ces réseaux selon les technologies G3-PLC et PRIME sont gérés avec des allocations spectrales prédéfinies.

Différent schémas de modulation peuvent en général être appliqués, et parfois différents schémas de modulation pour différents éléments d'une même trame. Par exemple, la transmission d'un entête de couche physique peut s'appuyer sur un schéma de modulation différent du schéma de modulation utilisé pour transmettre des données issues de couches supérieures à la couche physique.

De plus, en fonction du schéma de modulation utilisé, le dispositif transmetteur est apte à choisir un mode d'encodage parmi deux : le mode cohérent, dans lequel les symboles sont encodés de manière absolue (pas besoin d'un symbole précédant pour encoder/décoder un symbole courant), et le mode différentiel, dans lequel chaque symbole est encodé de manière différentielle par rapport au symbole précédant (sauf pour le tout premier qui, lui, est encodé de manière absolue). Le mode différentiel a l'avantage de permettre de s'abstraire des incertitudes de phase, mais est moins robuste que le mode cohérent puisqu'il s'appuie sur un encodage chaîné des symboles.

Le standard de communication G3-PLC définit que seul le mode différentiel peut être appliqué pour transmettre chaque entête de couche physique, alors que le mode cohérent ou le mode différentiel peut être, au choix, appliqué pour transmettre les données issues de couches supérieures à la couche physique. En mode différentiel, l'encodage repose sur la différence de phase entre deux symboles successifs, ce qui entraîne que le bruit blanc est doublé en puissance en réception de trame. Il s'en suit qu'une réception de trame soit avortée parce que son entête de couche physique n'a pas pu être démodulé correctement, alors que les données issues de couches supérieures à la couche physique auraient pu être démodulées correctement.

Il est souhaitable de pallier ces différents inconvénients de l'état de la technique.

Il est notamment souhaitable de fournir une solution qui permette d'améliorer les performances des transmissions de trame reposant sur des techniques de modulation et de sélection de mode d'encodage parmi le mode cohérent et le mode différentiel.

L'invention concerne un procédé de transmission de trames sous forme de symboles modulés depuis un dispositif transmetteur vers un dispositif récepteur, chaque trame comportant : un préambule adapté pour permettre au dispositif récepteur de se synchroniser sur ladite trame ; un entête de couche physique ; et des données issues de couches supérieures à la couche physique. De plus, le procédé est tel que le dispositif transmetteur transmet au moins une trame parmi lesdites trames en appliquant un mode d'encodage cohérent pour obtenir les symboles modulés correspondant à l'entête de couche physique. Ainsi, les performances des transmissions de trame sont améliorées en assurant que, au delà des schémas de modulation utilisés pour l'entête de couche physique et les données issues des couches supérieures à la couche physique, la robustesse de transmission de l'entête de couche physique est au moins aussi élevée que la robustesse de transmission des données issues des couches supérieures à la couche physique, par un choix adéquat du mode d'encodage vis-à-vis de l'entête de couche physique.

De plus, lorsqu'un mode d'encodage appliqué pour obtenir les symboles modulés correspondant auxdites données issues des couches supérieures à la couche physique est sélectionné par configuration par le dispositif transmetteur parmi le mode d'encodage cohérent et un mode d'encodage différentiel pour chaque dispositif récepteur, le mode d'encodage cohérent devant par configuration être appliqué aux données issues des couches supérieures à la couche physique à transmettre à au moins un dispositif récepteur, le dispositif transmetteur utilise, pour obtenir les symboles modulés correspondant à l'entête de couche physique de chaque trame, le même mode d'encodage que le mode d'encodage appliqué pour obtenir les symboles modulés correspondant auxdites données issues des couches supérieures à la couche physique à transmettre au dispositif récepteur concerné par lesdites données. Ainsi, lorsque le mode d'encodage vis-à-vis des données issues des couches supérieures à la couche physique est le mode différentiel, l'encodage vis-à-vis de l'entête de couche physique permet aussi de s'abstraire des incertitudes de phase pour démoduler l'entête de couche physique.

Selon un mode de réalisation particulier, le dispositif transmetteur transmet chaque trame dans le cadre de communications par courants porteurs en ligne. En effet, les communications par courants porteurs en ligne évoluent dans des environnements particulièrement générateurs de perturbations sporadiques.

Selon un mode de réalisation particulier, les symboles modulés sont transmis dans la bande fréquentielle CENELEC-A. En effet, la bande fréquentielle CENELEC-A utilisée dans le cadre de communications par courants porteurs en ligne est particulièrement sensible aux perturbations sporadiques précédemment mentionnées.

L'invention concerne également un dispositif transmetteur adapté pour transmettre des trames sous forme de symboles modulés vers un dispositif récepteur, chaque trame comportant : un préambule adapté pour permettre au dispositif récepteur de se synchroniser sur ladite trame ; un entête de couche physique ; et des données issues de couches supérieures à la couche physique. Le dispositif transmetteur est en outre adapté pour transmettre au moins une trame parmi lesdites trames en appliquant un mode d'encodage cohérent pour obtenir les symboles modulés correspondant à l'entête de couche physique. De plus, lorsqu'un mode d'encodage appliqué pour obtenir les symboles modulés correspondant auxdites données issues des couches supérieures à la couche physique est sélectionné par configuration par le dispositif transmetteur parmi le mode d'encodage cohérent et un mode d'encodage différentiel pour chaque dispositif récepteur, le mode d'encodage cohérent devant par configuration être appliqué aux données issues des couches supérieures à la couche physique à transmettre à au moins un dispositif récepteur, le dispositif transmetteur est configuré pour utiliser, pour obtenir les symboles modulés correspondant à l'entête de couche physique de chaque trame, le même mode d'encodage que le mode d'encodage appliqué pour obtenir les symboles modulés correspondant auxdites données issues des couches supérieures à la couche physique à transmettre au dispositif récepteur concerné par lesdites données. Ainsi, lorsque le mode d'encodage vis-à-vis des données issues des couches supérieures à la couche physique est le mode différentiel, l'encodage vis-à-vis de l'entête de couche physique permet aussi de s'abstraire des incertitudes de phase pour démoduler l'entête de couche physique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de communication dans lequel l'invention peut être implémentée ;
- la Fig. 2 illustre schématiquement un exemple de format de trames transmises dans le système de communication ; et
- la Fig. 3 illustre schématiquement un algorithme, exécuté par un dispositif transmetteur du système de communication, pour transmettre des trames à un dispositif récepteur du système de communication.

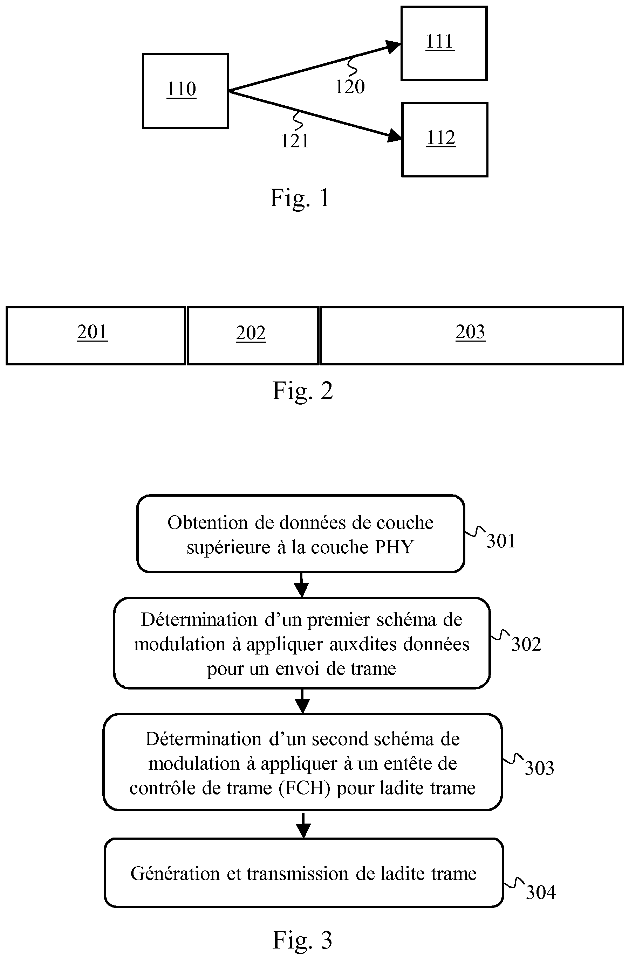

La Fig. 1 illustre schématiquement un système de communication dans lequel l'invention peut être implémentée. Le système de communication comporte un dispositif transmetteur 110 et au moins un dispositif récepteur 111. Le système de communication représenté à la Fig. 1 comporte, outre le dispositif récepteur 111, un autre dispositif récepteur 112. Le dispositif transmetteur 110 est adapté pour transmettre des trames de données au dispositif récepteur 111 via un lien de communication 120. Le dispositif transmetteur 110 est aussi adapté pour transmettre des trames de données au dispositif récepteur 112 via un lien de communication 121. Ces liens de communication peuvent être sans-fil ou filaires. La description qui suit prend plus particulièrement l'exemple préférentiel de transmissions par courants porteurs en ligne (« *powerline transmissions* » en anglais) via des liens de communication 120, 121 de type filaire, mais les principes présentés ici s'appliquent aussi à des transmissions de signaux radiofréquence via des liens de communication 120, 121 de type sans-fil. Les liens de communication 120, 121 peuvent aussi faire partie d'un réseau de communication interconnectant une pluralité de dispositifs de communication, dont les dispositifs transmetteur 110 et récepteurs 111, 112.

Le dispositif transmetteur 110 est adapté pour transmettre les trames de données en fonction de schémas de modulation sélectionnés parmi un ensemble prédéfini de schémas de modulation. Chaque trame est définie selon un format, au niveau de la couche physique, présenté ci-dessous en relation avec la Fig. 2, et comporte ainsi une succession de trois éléments : un préambule, un entête de couche physique, aussi appelé entête de contrôle de trame, et des données issues des couches supérieures à la couche physique. Comme détaillé par la suite, chacun de ces éléments constitutifs de la trame au niveau de la couche physique peut être modulé selon un schéma de modulation qui lui est propre. Le comportement du dispositif transmetteur 110 pour transmettre de telles trames de données est détaillé par la suite en relation avec la Fig. 3.

A ces schémas de modulation correspondent des schémas de démodulation à appliquer, en réception de chaque trame, par le dispositif récepteur 111, 112 auquel ladite trame est destinée, pour pouvoir démoduler ladite trame.

Les schémas de modulation applicables par le dispositif transmetteur 110, et par conséquent les schémas de démodulation applicables par les dispositifs récepteurs 111, 112, sont préférentiellement des schémas de modulation, respectivement démodulation, multi-porteuse de type OFDM.

La Fig. 2 illustre schématiquement un exemple de format de trames transmises dans le système de communication de la Fig. 1.

Comme déjà mentionné, chaque trame transmise dans le système de communication de la Fig. 1 comporte une succession de trois éléments : un préambule 201, un entête de contrôle de trame FCH (« *Frame Control Header* » en anglais) 202, et des données 203 issues des couches supérieures à la couche physique du dispositif transmetteur 110.

Le dispositif transmetteur 110 est donc adapté pour générer les trames de données de sorte que chaque trame, transmise sous forme de signaux modulés, débute par le préambule 201, qui est prédéfini en fonction du schéma de modulation selon lequel lesdits signaux ont été modulés. Le préambule est adapté pour permettre au dispositif récepteur 111, 112 auquel ladite trame est destinée de se synchroniser sur ladite trame, c'est-à-dire de pouvoir déterminer un instant effectif de début de trame. Pour ce faire, le préambule comporte typiquement une pluralité de copies successives d'un même symbole.

Le contenu et la durée du préambule sont donc prédéfinis et dépendent du schéma de modulation utilisé par le dispositif transmetteur 110. Les préambules de plusieurs trames transmises par le dispositif transmetteur 110 sont identiques lorsque le même schéma de modulation est appliqué par le dispositif transmetteur 110, et diffèrent sinon.

Un exemple de tel préambule est précisé dans les recommandations ITU G.9903 définissant le standard de communication G3-PLC. Ainsi, le préambule de chaque trame comporte une quantité prédéfinie de copies successives d'un même symbole, appelé SYNCP dans le standard de communication G3-PLC. S'ensuivent alors un autre symbole et un demi-symbole, appelés SYNCM dans le standard de communication G3-PLC, qui sont en opposition de phase par rapport auxdites copies successives du symbole SYNCP. La forme de chaque symbole préambule est prédéfinie en fonction du schéma de modulation sélectionné par le dispositif transmetteur 110.

Selon le standard de communication G3-PLC, plusieurs schémas de modulation peuvent être appliqués, en utilisant une modulation de type OFDM, et ce en fonction des bandes fréquentielles suivantes : modulation OFDM à trente-six porteuses dans la bande fréquentielle CENELEC A, qui va d'approximativement 35 kHz à 91 kHz ; modulation OFDM à soixante-douze porteuses dans la bande fréquentielle FCC, qui va approximativement de 150 kHz à 480 kHz ; modulation OFDM à cinquante-quatre porteuses dans la bande fréquentielle ARIB, qui va aussi approximativement de 150 kHz à 400 kHz; et modulation OFDM à seize porteuses dans la bande fréquentielle CENELEC B, qui va approximativement de 98 kHz à 122 kHz. Le standard de communication G3-PLC définit notamment, pour la formation du préambule, des déphasages à appliquer entre les porteuses utilisées dans chacune de ces bandes fréquentielles.

Selon le standard de communication G3-PLC, les schémas de modulation (et donc de démodulation) applicables, en fonction de la bande fréquentielle utilisée, sont les suivants : 16QAM (« *16-Quadrature Amplitude Modulation* » en anglais, uniquement en mode cohérent), 8PSK (« *8-Phase Shift Keying* » en anglais), QPSK (« *Quadrature Phase Shit Keying* » en anglais), BPSK (« *Binary Phase Shit Keying »* en anglais), ROBO (basé sur un schéma de modulation BPSK avec répétition de bits) et SUPER-ROBO (basé sur un schéma de modulation ROBO avec une plus grande répétition de bits). Le schéma de modulation SUPER-ROBO, est selon le standard de communication G3-PLC, réservé à la modulation de l'entête de contrôle de trame FCH 202.

Une approche similaire se retrouve dans les spécifications PRIME, qui comportent également dans leur version la plus récente plusieurs bandes fréquentielles. Une approche similaire est aussi applicable dans le cadre d'une transmission de signaux radiofréquence via des liens de communication 120, 121 de type sans-fil.

Le dispositif transmetteur 110 est aussi adapté pour générer les trames de données de sorte que, dans chaque trame, le préambule 201 est suivi de l'entête de contrôle de trame FCH 202. L'entête de contrôle de trame FCH 202 comporte des informations de configuration de couche physique permettant au dispositif récepteur 111, 112 auquel ladite trame est destinée de configurer sa couche physique pour effectuer les opérations de démodulation des données 203 issues des couches supérieures à la couche physique. Dans le cadre du standard de communication G3-PLC, l'entête de contrôle FCH comporte notamment une information représentative du schéma de modulation utilisé pour moduler les symboles correspondants aux données 203 issues des couches supérieures à la couche physique, ainsi qu'une information représentative du mappage de porteuses (« *tone mapping »* en anglais) indiquant au dispositif récepteur 111, 112 auquel ladite trame est destinée quelles sont les porteuses utilisées.

De plus, en fonction du schéma de modulation utilisé, le dispositif transmetteur 110 est apte à choisir un mode d'encodage parmi le mode cohérent et le mode différentiel.

Le choix de mode d'encodage parmi le mode cohérent et le mode différentiel doit être fait pour l'entête de contrôle de trame FCH 202, et doit être fait pour les données 203 issues des couches supérieures à la couche physique. Selon la présente invention, le mode d'encodage utilisé par le dispositif transmetteur 110 pour encoder l'entête de contrôle de trame FCH 202, pour au moins une trame parmi une pluralité de trames, est le mode cohérent. Par exemple, le dispositif transmetteur 110 utilise le mode cohérent pour transmettre chaque trame destinée au dispositif récepteur 111 et le mode différentiel pour transmettre chaque trame destinée au dispositif récepteur 112. Selon un autre exemple, le système de communication comporte uniquement le dispositif transmetteur 110 et le dispositif récepteur 111, et le dispositif transmetteur 110 utilise le mode cohérent pour transmettre chaque trame destinée au dispositif récepteur 111. Selon encore un autre exemple, le système de communication comporte uniquement le dispositif transmetteur 110 et le dispositif récepteur 111, et le dispositif transmetteur 110 utilise le mode cohérent pour transmettre des trames destinées au dispositif récepteur 111 et utilise le mode différentiel pour transmettre d'autres trames destinées au dispositif récepteur 111. Cet aspect est détaillé par la suite en relation avec la Fig. 3.

La Fig. 3 illustre schématiquement un algorithme, exécuté par le dispositif transmetteur 110, pour transmettre des trames dans le système de communication. L'algorithme de la Fig. 3 est plus particulièrement exécuté au sein de la couche physique du dispositif transmetteur 110, lorsqu'un mode d'encodage appliqué pour obtenir les symboles modulés correspondant auxdites données issues des couches supérieures à la couche physique est dynamiquement sélectionné par le dispositif transmetteur 110 parmi le mode cohérent et le mode différentiel.

Dans une étape 301, le dispositif transmetteur 110 obtient données qui sont issues des couches supérieures à la couche physique et qui sont à transmettre dans le système de communication.

Dans une étape 302 suivante, le dispositif transmetteur 110 détermine un premier schéma de modulation à appliquer aux données obtenues à l'étape 301. Le dispositif transmetteur 110 détermine plus particulièrement un mode d'encodage à appliquer parmi le mode cohérent et le mode différentiel vis-à-vis des données obtenues à l'étape 301. Le choix parmi le mode cohérent et le mode différentiel est donc ici réalisé par configuration préalable du dispositif transmetteur 110. Par exemple, le mode d'encodage applicable est défini en fonction du dispositif récepteur auquel les données obtenues à l'étape 301 sont adressées. Selon un autre exemple, le mode d'encodage applicable est défini en fonction d'une séquence prédéterminée, ladite séquence définissant quelles trames doivent être encodées, en ce qui concerne les données issues des couches supérieures à la couche physique, selon le mode cohérent, et lesquelles doivent être encodées, en ce qui concerne les données issues des couches supérieures à la couche physique, selon le mode différentiel. A noter qu'il est considéré ici que les communications avec au moins un dispositif récepteur nécessitent de mettre en place le mode cohérent pour encoder les données issues des couches supérieures à la couche physique qui lui sont adressées par le dispositif transmetteur 110.

Dans une étape 303 suivante, le dispositif transmetteur 110 obtient les informations à inscrire dans l'entête de couche physique de la trame à transmettre. Dans le cadre de l'entête de contrôle de trame FCH discuté en relation avec la Fig. 2, le dispositif transmetteur 110 inscrit des informations relatives audit premier schéma de modulation, ainsi qu'une information représentative du mappage de porteuses (*« tone mapping »* en anglais) indiquant au dispositif récepteur quelles sont les porteuses utilisées. Le dispositif transmetteur 110 détermine aussi un second schéma de modulation à appliquer à l'entête de couche physique de la trame à transmettre. Le second schéma de modulation est au moins aussi robuste que le premier schéma de modulation, puisque l'entête de couche physique contient des informations de configuration de couche physique permettant au dispositif récepteur de configurer sa couche physique pour effectuer les opérations de démodulation de la trame. Le dispositif transmetteur 110 détermine plus particulièrement un mode d'encodage à appliquer parmi le mode cohérent et le mode différentiel vis-à-vis du mode d'encodage sélectionné par configuration vis-à-vis des données obtenues à l'étape 301. Le mode d'encodage utilisé par le dispositif transmetteur 110 pour encoder l'entête de couche physique est alors le même que le mode d'encodage que le dispositif transmetteur 110 va utiliser pour encoder les données issues des couches supérieures à la couche physique.

Dans une étape 304 suivante, le dispositif transmetteur 110 génère la trame sous forme de symboles modulés, selon le format présenté en relation avec la Fig. 2, en appliquant les schémas de modulation et les modes d'encodage déterminés au cours des étapes 302 et 303. Par rapport au standard de communication G3-PLC, cette approche permet d'augmenter de 3 dB l'immunité au bruit de l'entête de couche physique.

Ainsi, au vu de ce qui précède, le dispositif transmetteur 110 transmet au moins une trame parmi une pluralité de trames en appliquant un mode d'encodage cohérent pour obtenir les symboles modulés correspondant à l'entête de couche physique, ce qui permet d'augmenter la robustesse de transmission pour ladite ou lesdites trames.

## Revendications

1. Procédé de transmission de trames sous forme de symboles modulés depuis un dispositif transmetteur (110) vers au moins un dispositif récepteur (111, 112), chaque trame comportant :
- un préambule (201) adapté pour permettre au dispositif récepteur (111) de se synchroniser sur ladite trame ;
- un entête (202) de couche physique ; et
- des données (203) issues de couches supérieures à la couche physique ;
le procédé étant tel que le dispositif transmetteur (110) transmet (304) au moins une trame parmi lesdites trames en appliquant un mode d'encodage cohérent pour obtenir les symboles modulés correspondant à l'entête (202) de couche physique.
**caractérisé en ce que**, lorsqu'un mode d'encodage appliqué pour obtenir les symboles modulés correspondant auxdites données (203) issues des couches supérieures à la couche physique est sélectionné (302) par configuration par le dispositif transmetteur (110) parmi le mode d'encodage cohérent et un mode d'encodage différentiel pour chaque dispositif récepteur (111, 112), le mode d'encodage cohérent devant par configuration être appliqué aux données (203) issues des couches supérieures à la couche physique à transmettre à au moins un dispositif récepteur (111, 112), le dispositif transmetteur (110) utilise, pour obtenir les symboles modulés correspondant à l'entête (202) de couche physique de chaque trame, le même mode d'encodage que le mode d'encodage appliqué pour obtenir les symboles modulés correspondant auxdites données (203) issues des couches supérieures à la couche physique à transmettre au dispositif récepteur (111, 112) concerné par lesdites données (203).

2. Procédé de sélection selon la revendication 1, **caractérisé en ce que** le dispositif transmetteur transmet chaque trame dans le cadre de communications par courants porteurs en ligne.

3. Procédé de sélection selon la revendications 2, **caractérisé en ce que** les symboles modulés sont transmis dans la bande fréquentielle CENELEC-A.

4. Dispositif transmetteur (110) adapté pour transmettre des trames sous forme de symboles modulés vers au moins un dispositif récepteur (111), chaque trame comportant :
- un préambule (201) adapté pour permettre au dispositif récepteur de se synchroniser sur ladite trame ;
- un entête (202) de couche physique ; et
- des données (203) issues de couches supérieures à la couche physique ;
le dispositif transmetteur (110) étant en outre adapté pour transmettre (304) au moins une trame parmi lesdites trames en appliquant un mode d'encodage cohérent pour obtenir les symboles modulés correspondant à l'entête (202) de couche physique,
**caractérisé en ce que**, lorsqu'un mode d'encodage appliqué pour obtenir les symboles modulés correspondant auxdites données (203) issues des couches supérieures à la couche physique est sélectionné (302) par configuration par le dispositif transmetteur (110) parmi le mode d'encodage cohérent et un mode d'encodage différentiel pour chaque dispositif récepteur (111, 112), le mode d'encodage cohérent devant par configuration être appliqué aux données (203) issues des couches supérieures à la couche physique à transmettre à au moins un dispositif récepteur (111, 112), le dispositif transmetteur (110) est configuré pour utiliser, pour obtenir les symboles modulés correspondant à l'entête (202) de couche physique de chaque trame, le même mode d'encodage que le mode d'encodage appliqué pour obtenir les symboles modulés correspondant auxdites données (203) issues des couches supérieures à la couche physique à transmettre au dispositif récepteur (111, 112) concerné par lesdites données (203).

## Patentansprüche

1. Verfahren zur Übertagung von Datenrahmen in Form von modulierten Symbolen von einer Übertragungsvorrichtung (110) zu mindestens einer Empfangsvorrichtung (111, 112), wobei jeder Rahmen umfasst:
- eine Präambel (201), die geeignet ist, es der Empfangsvorrichtung (111) zu ermöglichen, sich auf den Rahmen zu synchronisieren;
- einen Kopf (202) einer physischen Schicht; und
- Daten (203), die von Schichten über der physischen Schicht stammen;
wobei das Verfahren derart ist, dass die Übertragungsvorrichtung (110) mindestens einen Rahmen unter den Datenrahmen überträgt (304), wobei sie einen kohärenten Codierungsmodus anwendet, um die modulierten Symbole entsprechend dem Kopf (202) einer physischen Schicht zu erhalten,
**dadurch gekennzeichnet, dass**, wenn ein Codierungsmodus, der angewandt wird, um die modulierten Symbole entsprechend den Daten (203), die von den Schichten über der physikalischen Schicht stammen, zu erhalten, durch Konfiguration durch die Übertragungsvorrichtung (110) unter dem kohärenten Codierungsmodus und einem Differential-Codierungsmodus für jede Empfangsvorrichtung (111, 112) ausgewählt wird (302), wobei der kohärente Codierungsmodus durch Konfiguration an den Daten (203), die von den Schichten über der physischen Schicht stammen und an mindestens eine Empfangsvorrichtung (111, 112) zu übertragen sind, anzuwenden ist, die Übertragungsvorrichtung (110), um die modulierten Symbole entsprechend dem Kopf (202) einer physischen Schicht jedes Rahmens zu erhalten, denselben Codierungsmodus wie den Codierungsmodus verwendet, der angewandt wird, um die modulierten Symbole entsprechend den Daten (203), die von den Schichten über der physischen Schicht stammen und an die von den Daten (203) betroffene Empfangsvorrichtung (111, 112) zu übertragen sind, zu erhalten.

2. Auswahlverfahren nach Anspruch 1, **dadurch gekennzeichnet, dass** die Übertragungsvorrichtung jeden Datenrahmen im Rahmen von PLC-Kommunikationen überträgt.

3. Auswahlverfahren nach Anspruch 2, **dadurch gekennzeichnet, dass** die modulierten Symbole in dem Frequenzband CENELEC-A übertragen werden.

4. Übertragungsvorrichtung (110), die geeignet ist, Datenrahmen in Form von modulierten Symbolen zu mindestens einer Empfangsvorrichtung (111) zu übertragen, wobei jeder Rahmen umfasst:
- eine Präambel (201), die geeignet ist, es der Empfangsvorrichtung zu ermöglichen, sich auf den Rahmen zu synchronisieren;
- einen Kopf (202) einer physischen Schicht; und
- Daten (203), die von Schichten über der physischen Schicht stammen;
wobei die Übertragungsvorrichtung (110) ferner geeignet ist, mindestens einen Rahmen unter den Datenrahmen zu übertragen (304), wobei sie einen kohärenten Codierungsmodus anwendet, um die modulierten Symbole entsprechend dem Kopf (202) einer physischen Schicht zu erhalten,
**dadurch gekennzeichnet, dass**, wenn ein Codierungsmodus, der angewandt wird, um die modulierten Symbole entsprechend den Daten (203), die von den Schichten über der physikalischen Schicht stammen, zu erhalten, durch Konfiguration durch die Übertragungsvorrichtung (110) unter dem kohärenten Codierungsmodus und einem Differential-Codierungsmodus für jede Empfangsvorrichtung (111, 112) ausgewählt wird (302), wobei der kohärente Codierungsmodus durch Konfiguration an den Daten (203), die von den Schichten über der physischen Schicht stammen und an mindestens eine Empfangsvorrichtung (111, 112) zu übertragen sind, anzuwenden ist, die Übertragungsvorrichtung (110), um die modulierten Symbole entsprechend dem Kopf (202) einer physischen Schicht jedes Rahmens zu erhalten, ausgelegt ist, denselben Codierungsmodus wie den Codierungsmodus zu verwenden, der angewandt wird, um die modulierten Symbole entsprechend den Daten (203), die von den Schichten über der physischen Schicht stammen und an die von den Daten (203) betroffene Empfangsvorrichtung (111, 112) zu übertragen sind, zu erhalten.

## Claims

1. Method for transmitting frames in the form of modulated symbols from a transmitter device (110) to at least one receiver device (111, 112), each frame comprising:
- a preamble (201) adapted to allow the receiver device (111) to synchronize itself with the said frame;
- a physical layer header (202); and
- data (203) arising from higher layers than the physical layer;
the method being such that the transmitter device (110) transmits (304) at least one frame from among the said frames while applying a mode of coherent encoding to obtain the modulated symbols corresponding to the physical layer header (202).
**characterized in that**, when a mode of encoding applied to obtain the modulated symbols corresponding to the said data arising (203) from the higher layers than the physical layer is selected (302) by configuration by the transmitter device (110) from among the mode of coherent encoding and a mode of differential encoding for each receiver device (111, 112), the mode of coherent encoding having by configuration to be applied to the data (203) arising from the higher layers than the physical layer to be transmitted to at least one receiver device (111, 112), the transmitter device (110) uses, to obtain the modulated symbols corresponding to the physical layer header (202) of each frame, the same mode of encoding as the mode of encoding applied to obtain the modulated symbols corresponding to the said data (203) arising from the higher layers than the physical layer to be transmitted to the receiver device (111, 112) concerned with the said data (203).

2. Method of selection according to Claim 1, **characterized in that** the transmitter device transmits each frame within the context of power-line communications.

3. Method of selection according to Claims 2, **characterized in that** the modulated symbols are transmitted in the CENELEC-A frequency band.

4. Transmitter device (110) adapted to transmit frames in the form of modulated symbols to at least one receiver device (111), each frame comprising:
- a preamble (201) adapted to allow the receiver device to synchronize itself with the said frame;
- a physical layer header (202); and
- data (203) arising from higher layers than the physical layer;
the transmitter device (110) furthermore being adapted to transmit (304) at least one frame from among the said frames while applying a mode of coherent encoding to obtain the modulated symbols corresponding to the physical layer header (202),
**characterized in that**, when a mode of encoding applied to obtain the modulated symbols corresponding to the said data (203) arising from the higher layers than the physical layer is selected (302) by configuration by the transmitter device (110) from among the mode of coherent encoding and a mode of differential encoding for each receiver device (111, 112), the mode of coherent encoding having by configuration to be applied to the data (203) arising from the higher layers than the physical layer to be transmitted to at least one receiver device (111, 112), the transmitter device (110) is configured to use, to obtain the modulated symbols corresponding to the physical layer header (202) of each frame, the same mode of encoding as the mode of encoding applied to obtain the modulated symbols corresponding to the said data (203) arising from the higher layers than the physical layer to be transmitted to the receiver device (111, 112) concerned with the said data (203).
